# EUROPEAN PATENT APPLICATION

(11) **EP 3 876 100 A2**
(43) Date of publication of application: **08.09.2021**
(21) Application number: 21165042.9
(22) Date of filing: 25.03.2021
(51) Int. Cl.: G06F 9/50

(54) **METHOD AND APPARATUS FOR SHARING GPU, ELECTRONIC DEVICE AND READABLE STORAGE MEDIUM**

(30) Priority: 04.08.2020 CN 202010773883
(71) Applicant: BEIJING BAIDU NETCOM SCIENCE AND TECHNOLOGY CO. LTD., 100085 Beijing (CN)
(72) Inventor: HE, Longhua, Beijing, 100085 (CN)
(74) Representative: Cabinet Beau de Loménie

(57) **Abstract**

Embodiments of the present disclosure disclose a method and apparatus for sharing a GPU, an electronic device and a computer readable storage medium, relate to the technical fields of Kubernetes, containerization, cloud platforms, cloud computing, and resource allocation. A specific embodiment of the method includes: receiving (201) a GPU use request initiated by a target container; determining (202) a target virtual GPU based on the GPU use request; the target virtual GPU being at least one of all virtual GPUs, and the virtual GPU being obtained by virtualizing a physical GPU using a virtualization technology; and mounting (203) a target physical GPU corresponding to the target virtual GPU to the target container. In this embodiment, by combining the virtualization technology to virtualize a physical GPU into a plurality of virtual GPUs, a physical GPU may be mounted to a plurality of containers at the same time, and shared by the plurality of containers, thereby increasing the usage rate of the GPU and reducing a purchase demand and purchase cost of the GPU.

## Description

### TECHNICAL FIELD

The present disclosure relates to the technical field of data processing, in particular to the technical fields of Kubernetes, containerization, cloud platforms, cloud computing, and resource allocation, and more particular to a method and apparatus for sharing a GPU, an electronic device and a computer readable storage medium.

### BACKGROUND

At present, containerization technology has changed current application architecture patterns of cloud computing. As kubernetes becomes the mainstream container orchestration engine, more and more applications are hosted on the container engine kubernetes.

For machine learning scenarios, many deep learning training and reasoning tasks need to be accelerated using GPU (Graphics Processing Unit), and training tasks generally run in a separate container.

The existing Kubernetes may mount a separate physical GPU for each container, that is, a physical GPU can only be allocated to one container.

### SUMMARY

Embodiments of the present disclosure propose a method and apparatus for sharing a GPU, an electronic device, a computer readable storage medium, and a computer program product.

In a first aspect, an embodiment of the present disclosure provides a method for sharing a GPU (Graphics Processing Unit), the method including: receiving a GPU use request initiated by a target container; determining a target virtual GPU based on the GPU use request; where the target virtual GPU is at least one of all virtual GPUs, and the virtual GPUs are obtained by virtualizing a physical GPU using a virtualization technology; and mounting a target physical GPU corresponding to the target virtual GPU to the target container.

In a second aspect, an embodiment of the present disclosure provides an apparatus for sharing a GPU(Graphics Processing Unit), the apparatus including: a request receiving unit, configured to receive a GPU use request initiated by a target container; a virtual GPU determination unit, configured to determine a target virtual GPU based on the GPU use request; where the target virtual GPU is at least one of all virtual GPUs, and the virtual GPUs are obtained by virtualizing a physical GPU using a virtualization technology; and a physical GPU mounting unit, configured to mount a target physical GPU corresponding to the target virtual GPU to the target container.

In a third aspect, an embodiment of the present disclosure provides an electronic device, including: at least one processor; and a memory communicatively connected to the at least one processor. The memory stores instructions executable by the at least one processor, the instructions, when executed by the at least one processor, cause the at least one processor to perform the method for sharing a GPU according to any implementation of the first aspect.

In a fourth aspect, an embodiment of the present disclosure provides a non-transitory computer readable storage medium, storing computer instructions. The computer instructions are used to cause the computer to perform the method for sharing a GPU according to any implementation of the first aspect.

In a fifth aspect, an embodiment of the present disclosure provides a computer program product, including a computer program. The computer program, when executed by a processor, causes the processor to implement the method for sharing a GPU according to any implementation of the first aspect.

The method and apparatus for sharing a GPU, the electronic device and the computer readable storage medium provided by embodiments of the present disclosure, first receiving a GPU use request initiated by a target container; then determining a target virtual GPU based on the GPU use request, the target virtual GPU being at least one of all virtual GPUs, and the virtual GPU being obtained by virtualizing a physical GPU using a virtualization technology; and finally mounting a target physical GPU corresponding to the target virtual GPU to the target container.

Different from the existing technology that a physical GPU can only be used by a certain container to which it is uniquely mounted, the embodiments of the present disclosure virtualizes a physical GPU into a plurality of virtual GPUs by combining the virtualization technology, thereby enabling an available GPU detection mechanism of Kubernetes to identify a plurality of available GPUs and allocate to different containers based on different virtual GPU information, so that a physical GPU is mounted to a plurality of containers at the same time, and shared by the plurality of containers, thereby increasing the usage rate of the GPU and reducing a purchase demand and purchase cost of the GPU.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

By reading the detailed description of non-limiting embodiments with reference to the following accompanying drawings, other features, objectives and advantages of the present disclosure will become more apparent.
Fig. 1 is an example system architecture in which embodiments of the present disclosure may be implemented;
Fig. 2 is a flowchart of a method for sharing a GPU provided by an embodiment of the present disclosure;
Fig. 3 is a flowchart of another method for sharing a GPU provided by an embodiment of the present disclosure;
Fig. 4 is a schematic flowchart of the method for sharing a GPU in an application scenario provided by an embodiment of the present disclosure;
Fig. 5 is a structural block diagram of an apparatus for sharing a GPU provided by an embodiment of the present disclosure; and
Fig. 6 is a schematic structural diagram of an electronic device suitable for implementing the method for sharing a GPU provided by an embodiment of the present disclosure.

### DETAILED DESCRIPTION OF EMBODIMENTS

The present disclosure will be further described in detail below with reference to accompanying drawings and embodiments. It may be understood that the specific embodiments described herein are only used to explain the related disclosure, but not to limit the disclosure. In addition, it should also be noted that, for ease of description, only parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

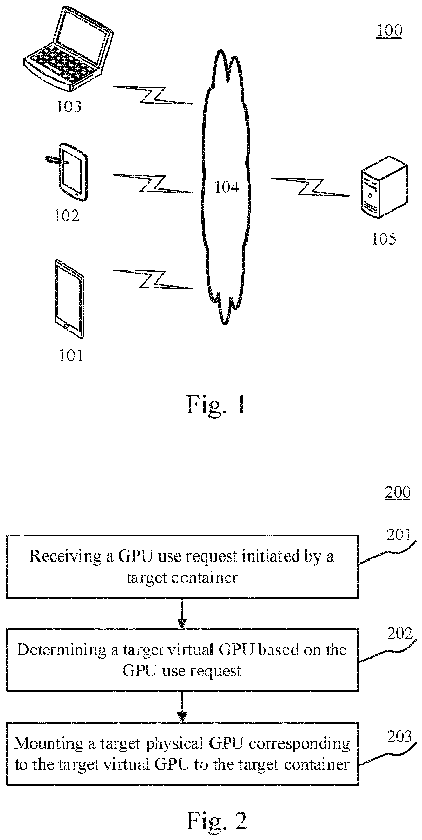

Fig. 1 illustrates an example system architecture 100 of a method and apparatus for sharing a GPU, an electronic device and a computer readable storage medium in which embodiments of the present disclosure may be implemented.

As shown in Fig. 1, the system architecture 100 may include terminal devices 101, 102, 103, a network 104, and a server 105. The network 104 is used to provide a communication link medium between the terminal devices 101, 102, 103 and the server 105. The network 104 may include various types of connections, such as wired, wireless communication links, or optic fibers.

A user may interact with the server 105 through the network 104 using the terminal devices 101, 102, 103, to receive or send messages and the like. The terminal devices 101, 102, 103 and the server 105 may be installed with various applications for implementing information communication between the two, such as command transmission applications, GPU acceleration applications, or instant messaging applications.

The terminal devices 101, 102, and 103 and the server 105 may be hardware or software. When the terminal devices 101, 102, and 103 are hardware, they may be various electronic devices having display screens, including but not limited to smart phones, tablet computers, laptop portable computers, desktop computers, or the like. When the terminal devices 101, 102, and 103 are software, they may be installed in the electronic devices listed above, or may be implemented as a plurality of software programs or software modules, or as a single software or software module, which is not particularly limited herein. When the server 105 is hardware, it may be implemented as a distributed server cluster composed of a plurality of servers, or may be implemented as a single server. When the server is software, it may be implemented as a plurality of software or software modules, or as a single software program or software module, which is not particularly limited herein.

The server 105 may provide various services through various built-in applications. Take a GPU acceleration application that may provide GPU acceleration services for containers running on a containerized cloud platform as an example. When running the GPU acceleration application, the server 105 may implement the following effects: first, receiving a GPU use request initiated by a target container from the terminal devices 101, 102, and 103 through the network 104; then, determining a target virtual GPU based on the GPU use request, the target virtual GPU being at least one of all virtual GPUs, and the virtual GPU being obtained by virtualizing a physical GPU using a virtualization technology; and finally, mounting a target physical GPU corresponding to the target virtual GPU to the target container. That is, the server 105 allocates and mounts the target physical GPU to the target container which initiates the GPU use request through the above processing steps, and by the use of the virtualization technology, the same physical GPU may be mounted to a plurality of containers to realize GPU sharing.

It should be noted that, in addition to receiving the GPU use request from the terminal devices 101, 102, 103 in real time through the network 104, the GPU request may also be pre-stored locally in the server 105 in various methods. Therefore, when the server 105 detects that the data have been stored locally (for example, GPU allocation tasks previously saved before starting the processing), the server may choose to directly acquire the data locally. In this case, the example system architecture 100 may not include the terminal devices 101, 102, 103 and the network 104.

Since the containers run on the cloud platform, GPU acceleration training tasks for mounting GPUs for the containers should also run on the cloud platform. Therefore, the method for sharing a GPU provided in the subsequent embodiments of the present disclosure is generally performed by the server 105 for building a cloud platform, and correspondingly, the apparatus for sharing a GPU is generally also provided in the server 105.

It should be understood that the number of terminal devices, networks, and servers in Fig. 1 is merely illustrative. Depending on the implementation needs, there may be any number of terminal devices, networks, and servers.

With reference to Fig. 2, Fig. 2 is a flowchart of a method for sharing a GPU provided by an embodiment of the present disclosure. A flow 200 includes the following steps.
Step 201: receiving a GPU use request initiated by a target container.

This step aims to acquire the GPU use request by an executing body of the method for sharing a GPU (for example, the server 105 shown in Fig. 1), where the GPU use request is initiated by a container under a containerized cloud platform, and the containerized cloud platform is managed by the Kubernetes engine.

A certain container under the containerized cloud platform initiates the GPU use request to the executing body based on a GPU acceleration demand required by a user issued task, to indicate that the container needs to occupy a certain GPU to implement GPU acceleration.

Specifically, the GPU use request may include a variety of information, such as user identity information, container affiliation information, container number, business information corresponding to container, business information run by container, business type, and GPU demand applied for. Here, the GPU demand includes video memory capacity, video memory level, video memory type, etc., which is not particularly limited herein, and may be flexibly selected according to actual needs.

Step 202: determining a target virtual GPU based on the GPU use request;
On the basis of step 201, this step aims to determine the target virtual GPU based on the GPU use request by the executing body. The target virtual GPU is at least one of all virtual GPUs, and the virtual GPUs are obtained by virtualizing a physical GPU using a virtualization technology.

The virtualization technology for GPUs may be roughly divided into two categories. One is to virtualize more virtual GPUs based on a few physical GPUs, and the other is to simulate virtual GPUs using software based on general hardware resources. Here, the first method is used in the present disclosure, that is, to virtualize more virtual GPUs based on a few physical GPUs, that is, the virtual GPU actually corresponds to the hardware of a physical GPU, and the existing physical GPU is the key to GPU acceleration.

Related configuration of the virtual GPU virtualized using the virtualization technology may be randomly generated or customized by a user. The purpose of virtualization is to deceive a detection mechanism and make it mistakenly believe that there is a one-to-one corresponding physical GPU, but in fact, a plurality of virtual GPUs may all point to a given physical GPU. In order to deceive the detection mechanism, the virtual GPU should have the same parameters as the physical GPU, such as video memory capacity, video memory type, port number, calling method, production number, and the like.

Under normal circumstances, one container may only request to mount one GPU. To ensure that the mounted GPU meets the requirements of the container, requirements such as GPU type or video memory capacity may also be acquired from the GPU use request to select a suitable GPU from a large number of idle virtual GPUs.

It should be understood that whether a plurality of virtual GPUs virtualized by a physical GPU are in an idle status is not affected by whether other virtual GPUs have been mounted to the container, that is, assuming that a physical GPU virtualizes 3 virtual GPUs, named as Fake GPU1, Fake GPU2, and Fake GPU3. After Fake GPU1 is mounted to container A, although the corresponding physical GPU is no longer in an idle status, Fake GPU2 and Fake GPU3 are still idle GPUs that may be allocated and mounted.

Step 203: mounting a target physical GPU corresponding to the target virtual GPU to the target container.

On the basis of step 202, this step aims to mount the target physical GPU corresponding to the target virtual GPU to the target container by the executing body, so as to achieve the purpose of a plurality of containers sharing one physical GPU.

Different from the existing technology that a physical GPU can only be used by a certain container to which it is uniquely mounted, the method for sharing a GPU provided by the embodiment of the present disclosure virtualizes a physical GPU into a plurality of virtual GPUs by combining the virtualization technology, thereby enabling an available GPU detection mechanism of Kubernetes to identify a plurality of available GPUs and allocate to different containers based on different virtual GPU information, so that a physical GPU is mounted to a plurality of containers at the same time, and shared by the plurality of containers, thereby increasing the usage rate of the GPU and reducing a purchase demand and purchase cost of the GPU.

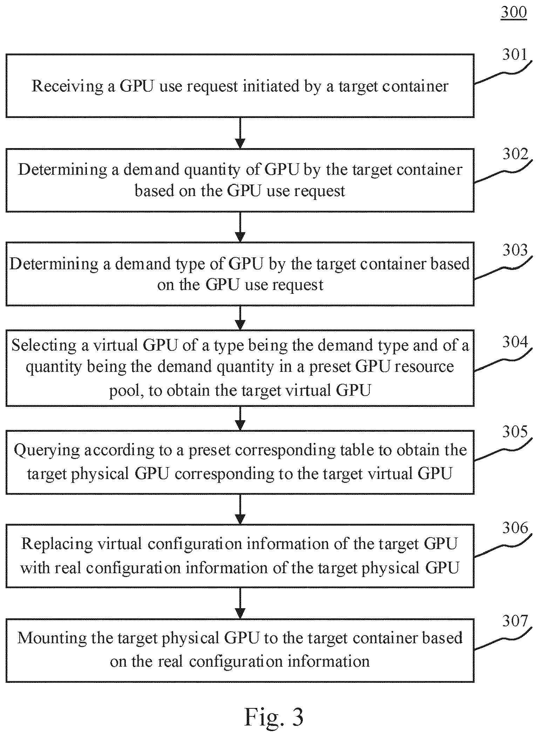

With reference to Fig. 3, Fig. 3 is a flowchart of another method for sharing a GPU provided by an embodiment of the present disclosure. A flow 300 includes the following steps.
Step 301: receiving a GPU use request initiated by a target container;
   This step is consistent with step 201 shown in Fig. 2. For the same part of content, reference may be made to the corresponding part of the previous embodiment, and repeated description thereof will be omitted.
Step 302: determining a demand quantity of GPU by the target container based on the GPU use request.
Step 303: determining a demand type of GPU by the target container based on the GPU use request.
   In step 302 and step 303, the executing body determines two requirements of the target container for the required GPU based on the GPU use request, respectively, which are the demand quantity and the demand type. The demand quantity may refer to the number of GPU when candidate GPUs all have the same video memory, or may also refer to a video memory demand when the candidate GPUs have different video memories. The demand type may include classification methods such as video memory type, video memory manufacturer, and batch, in order to select the most suitable target virtual GPU for GPU acceleration for tasks running in the target container through the above two requirements.
Step 304: selecting a virtual GPU of a type being the demand type and of a quantity being the demand quantity in a preset GPU resource pool, to obtain the target virtual GPU;

Here, the GPU resource pool records information of all virtual GPUs in an idle status.

This step aims to select the virtual GPU of the type and the quantity meeting the requirements in the GPU resource pool by the executing body, that is, selects the target virtual GPU.

Step 305: querying according to a preset corresponding table to obtain the target physical GPU corresponding to the target virtual GPU.

The corresponding table records a corresponding relationship between each physical GPU and each virtual GPU virtualized by the physical GPU using the virtualization technology.

This step aims to query the target physical GPU corresponding to the target virtual GPU according to the corresponding table by the executing body, so as to acquire various configuration information required to successfully mount a physical GPU to a certain container.

Step 306: replacing virtual configuration information of the target GPU with real configuration information of the target physical GPU.

Step 307: mounting the target physical GPU to the target container based on the real configuration information.

On the basis of step 305, step 306 aims to replace the virtual configuration information of the target GPU with the real configuration information of the target physical GPU by the executing body, and then in step 307, mount the target physical GPU to the target container based on the real configuration information by the executing body.

On the basis of the previous embodiment, the present embodiment specifically provides a method for selecting the target virtual GPU that meets the requirements of the target container based on two parameters of demand quantity and demand type through steps 302-304, so that the selected target virtual GPU may bring better acceleration effects to training tasks running in the target container; and through step 305-step 308, a solution is specifically provided for confirming the target physical GPU and mounting to the target container based on the preset GPU resource pool and the corresponding table. Pooled resources are conducive to centralized management, and the corresponding table clearly establishes an association between the virtual GPU and the physical GPU, improving the accuracy of mounting.

It should be understood that the above step 302-step 304 provide only an example implementation, and there are also other methods for determining the target virtual GPU required (for example, only based on the demand quantity). Similarly, step 305-step 308 also only provide a feasible implementation in a certain application scenario, and may also be flexibly adjusted according to all possible special requirements in different application scenarios. At the same time, there is no dependency or causality between the specific implementation solution provided in step 302-step 304 and the specific implementation solution provided in step 305-step 308, so a new embodiment may be constructed based on the previous embodiment alone. The present embodiment only exists as a preferred embodiment that includes both of the solutions of above two parts.

On the basis of any of the foregoing embodiments, in response to the target physical GPU being simultaneously mounted to at least two containers, the target physical GPU may also be controlled to isolate model training tasks from different containers through different processes, to prevent confusion and conflicts in data operations in the model training tasks from different containers.

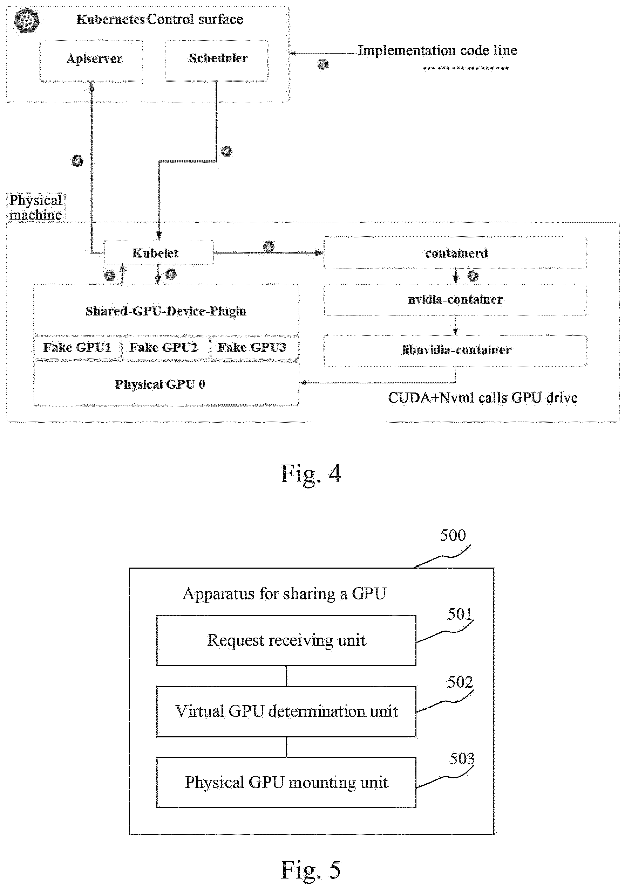

In order to deepen understanding, an embodiment of the present disclosure also provides a specific implementation solution in combination with a specific application scenario, and reference may be made to a schematic flowchart as shown in Fig. 4.

As shown in Fig. 4, a physical GPU card is on a physical machine, which is represented as Physical GPUO in Fig. 4. The physical GPU card virtualizes three virtual GPUs using the virtualization technology, represented as Fake GPU1, Fake GPU2, and Fake GPU3, and the three virtual GPUs are located on an upper layer of the physical GPU in a hierarchical structure. On this basis, a practical flow that may be used to implement GPU sharing may be divided into the following steps.
① Shared-GPU-Device-Plugin process deployed on the physical machine acquires information of physical GPU card-Physical GPUO connected to the physical machine by calling the nvml library (a dynamic library provided by the graphics processor manufacturer NVIDIA corporation, for monitoring the parameters of the image processors manufactured), then virtualize the Physical GPUO into three virtual cards through virtualization, that is, set three new IDs: Fake-GPUl, FakeGPU2, and FakeGPU3, and establish a mapping relationship between the three new IDs and Physical GPUO. Then, Shared-GPU-Device-Plugin process reports the three IDs of Fake-GPUl, FakeGPU2, and FakeGPU3 to Kubelet (a management unit under the Kubernetes engine).
②Kubelet reports IDs of the received 3 virtual GPUs to Apiserver (providing interfaces for adding, deleting, modifying, and checking various resource objects of Kubemetes, which is a data bus and data center of the entire system) of Kubernetes. As of this step, a Kubernetes cluster may determine that there are three GPU cards on the physical machine.
③A user needs to apply for a GPU card to create a container in a POD (the smallest unit that can be created and deployed in Kubernetes, is an application instance in the Kubernetes cluster, which is always deployed on a same node, including one or more containers).
④Scheduler (a scheduler of Kubernetes, the main task is to allocate a defined pod to nodes of the cluster) of Kubernetes may select an ID (assuming is Fake GPU1) from the IDs of the 3 alternative virtual GPUs for the POD, and the POD may then be scheduled to the physical machine.
⑤ Kubelet calls Shared-GPU-Device-Plugin process and requires Shared-GPU-Device-Plugin to return specific information of Fake GPU1. Shared-GPU-Device-Plugin may convert virtual configuration information of Fake GPU1 to physical configuration information of physical card-Physical GPUO and return it to Kubelet.
⑥Kubelet sets the configuration information of physical card-Physical GPUO as an environment variable and sends the variable to containerd (container plugin implementation of kubernetes container runtime interface).
⑦containerd calls nvidia-container to mount physical card-Physical GPUO. As of this step, programs inside the container may call the dynamic library libnvidia-container for GPU acceleration.

The above steps give the process of how to mount the physical GPU card corresponding to Fake GPU1 to a certain container. Based on the above steps, it may be easily expanded to obtain similar processes for other containers. When Fake-GPUl, FakeGPU2, FakeGPU3 are allocated to different containers through the above flow, it may actually cause the physical card-Physical GPU0, to be mounted to different containers at the same time, thereby realizing GPU sharing.

With further reference to Fig. 5, as an implementation of the method shown in the above figures, an embodiment of the present disclosure provides an apparatus for sharing a GPU, and the apparatus embodiment corresponds to the method embodiment as shown in Fig. 2. The apparatus may be specifically applied to various electronic devices.

As shown in Fig. 5, an apparatus 500 for sharing a GPU of the present embodiment may include: a request receiving unit 501, a virtual GPU determination unit 502, a physical GPU mounting unit 503. The request receiving unit 501 is configured to receive a GPU use request initiated by a target container. The virtual GPU determination unit 502 is configured to determine a target virtual GPU based on the GPU use request, the target virtual GPU being at least one of all virtual GPUs, and the virtual GPUs being obtained by virtualizing a physical GPU using a virtualization technology. The physical GPU mounting unit 503 is configured to mount a target physical GPU corresponding to the target virtual GPU to the target container.

In the present embodiment, in the apparatus 500 for sharing a GPU: for the specific processing and the technical effects of the request receiving unit 501, the virtual GPU determination unit 502, the physical GPU mounting unit 503, reference may be made to the relevant descriptions of steps 201-203 in the corresponding embodiment of Fig. 2 respectively, and detailed description thereof will be omitted.

In some alternative implementations of the present embodiment, the virtual GPU determination unit 502 may include: a demand quantity determination subunit, configured to determine a demand quantity of GPU by the target container based on the GPU use request; and a target virtual GPU selection subunit, configured to select a virtual GPU of a quantity consistent with the demand quantity in a preset GPU resource pool, to obtain the target virtual GPU; where the GPU resource pool records information of all virtual GPUs in an idle status.

In some alternative implementations of the present embodiment, the target virtual GPU selection subunit may be further configured to: determine a demand type of GPU by the target container based on the GPU use request; and select a virtual GPU of a type being the demand type and of a quantity being the demand quantity.

In some alternative implementations of the present embodiment, the physical GPU mounting unit 503 may be further configured to: query according to a preset corresponding table to obtain the target physical GPU corresponding to the target virtual GPU; where the corresponding table records a corresponding relationship between each physical GPU and each virtual GPU virtualized by the physical GPU using the virtualization technology; replace virtual configuration information of the target GPU with real configuration information of the target physical GPU; and mount the target physical GPU to the target container based on the real configuration information.

In some alternative implementations of the present embodiment, the apparatus 500 for sharing a GPU may further include: a process isolation unit, configured to control the target physical GPU to isolate model training tasks from different containers through different processes, in response to the target physical GPU being simultaneously mounted to at least two containers.

The present embodiment exists as the apparatus embodiment corresponding to the foregoing method embodiment. Different from the existing technology that a physical GPU can only be used by a certain container to which it is uniquely mounted, the apparatus for sharing a GPU provided by the present embodiment virtualizes a physical GPU into a plurality of virtual GPUs by combining the virtualization technology, thereby enabling an available GPU detection mechanism of Kubernetes to identify a plurality of available GPUs and allocate to different containers based on different virtual GPU information, so that a physical GPU is mounted to a plurality of containers at the same time, and shared by the plurality of containers, thereby increasing the usage rate of the GPU and reducing a purchase demand and purchase cost of the GPU.

According to an embodiment of the present disclosure, the present disclosure further provides an electronic device and a computer readable storage medium.

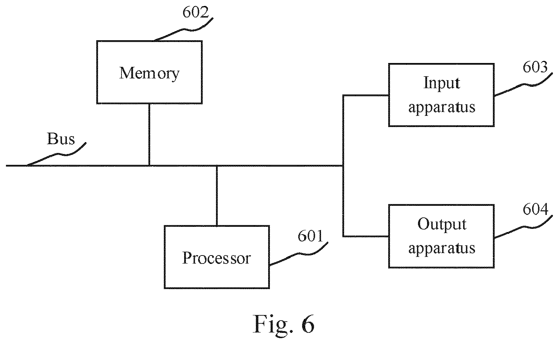

Fig. 6 shows a schematic structural diagram of an electronic device suitable for implementing the method for sharing a GPU provided by an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 6, one processor 601 is used as an example.

The memory 602 is a non-transitory computer readable storage medium provided by the present disclosure. The memory stores instructions executable by at least one processor, so that the at least one processor performs the method for sharing a GPU provided by the present disclosure. The non-transitory computer readable storage medium of the present disclosure stores computer instructions for causing a computer to perform the method for sharing a GPU provided by the present disclosure.

The memory 602, as a non-transitory computer readable storage medium, may be used to store non-transitory software programs, non-transitory computer executable programs and modules, such as program instructions/modules corresponding to the method for sharing a GPU in the embodiments of the present disclosure (for example, the request receiving unit 501, the virtual GPU determination unit 502, the physical GPU mounting unit 503 as shown in Fig. 5). The processor 601 executes the non-transitory software programs, instructions, and modules stored in the memory 602 to execute various functional applications and data processing of the server, that is, to implement the method for sharing a GPU in the method embodiments.

The memory 602 may include a storage program area and a storage data area, where the storage program area may store an operating system and at least one function required application program; and the storage data area may store data created by the use of the electronic device according to the method for sharing a GPU, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for sharing a GPU through a network. Examples of the above network include but are not limited to the Internet, intranet, local area network, mobile communication network, and combinations thereof.

The electronic device of the method for sharing a GPU may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for sharing a GPU, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

An embodiment of the present disclosure further provides a computer program product, including a computer program. The computer program, when executed by a processor, causes the processor to implement the method for sharing a GPU according to any embodiment of the present disclosure.

Different from the existing technology that a physical GPU can only be used by a certain container to which it is uniquely mounted, the above technical solution provided by the present embodiment virtualizes a physical GPU into a plurality of virtual GPUs by combining the virtualization technology, thereby enabling an available GPU detection mechanism of Kubernetes to identify a plurality of available GPUs and allocate to different containers based on different virtual GPU information, so that a physical GPU is mounted to a plurality of containers at the same time, and shared by the plurality of containers, thereby increasing the usage rate of the GPU and reducing a purchase demand and purchase cost of the GPU.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for sharing a Graphics Processing Unit, GPU, the method comprising:
receiving (201) a GPU use request initiated by a target container;
determining (202) a target virtual GPU based on the GPU use request; wherein the target virtual GPU is at least one of all virtual GPUs, and the virtual GPUs are obtained by virtualizing a physical GPU using a virtualization technology; and
mounting (203) a target physical GPU corresponding to the target virtual GPU to the target container.

2. The method according to claim 1, wherein the determining a target virtual GPU based on the GPU use request, comprises:
determining (302) a demand quantity of GPU by the target container based on the GPU use request; and
selecting (304) a virtual GPU of a quantity consistent with the demand quantity in a preset GPU resource pool, to obtain the target virtual GPU; wherein the GPU resource pool records information of all virtual GPUs in an idle status.

3. The method according to claim 2, wherein the selecting a virtual GPU of a quantity consistent with the demand quantity, comprises:
determining (303) a demand type of GPU by the target container based on the GPU use request; and
selecting (304) a virtual GPU of a type being the demand type and of a quantity being the demand quantity.

4. The method according to any one of claims 1-3, wherein the mounting a target physical GPU corresponding to the target virtual GPU to the target container, comprises:
querying (305) according to a preset corresponding table to obtain the target physical GPU corresponding to the target virtual GPU; wherein the corresponding table records a corresponding relationship between each physical GPU and each virtual GPU virtualized by the physical GPU using the virtualization technology;
replacing (306) virtual configuration information of the target GPU with real configuration information of the target physical GPU; and
mounting (307) the target physical GPU to the target container based on the real configuration information.

5. The method according to any one of claims 1-4, wherein the method further comprises:
controlling the target physical GPU to isolate model training tasks from different containers through different processes, in response to the target physical GPU being simultaneously mounted to at least two containers.

6. An apparatus for sharing a Graphics Processing Unit, GPU, the apparatus comprising:
a request receiving unit (501), configured to receive a GPU use request initiated by a target container;
a virtual GPU determination unit (502), configured to determine a target virtual GPU based on the GPU use request; wherein the target virtual GPU is at least one of all virtual GPUs, and the virtual GPUs are obtained by virtualizing a physical GPU using a virtualization technology; and
a physical GPU mounting unit (503), configured to mount a target physical GPU corresponding to the target virtual GPU to the target container.

7. The apparatus according to claim 6, wherein the virtual GPU determination unit (502) comprises:
a demand quantity determination subunit, configured to determine a demand quantity of GPU by the target container based on the GPU use request; and
a target virtual GPU selection subunit, configured to select a virtual GPU of a quantity consistent with the demand quantity in a preset GPU resource pool, to obtain the target virtual GPU; wherein the GPU resource pool records information of all virtual GPUs in an idle status.

8. The apparatus according to claim 7, wherein the target virtual GPU selection subunit is further configured to:
determine a demand type of GPU by the target container based on the GPU use request;
and
select a virtual GPU of a type being the demand type and of a quantity being the demand quantity.

9. The apparatus according to any one of claims 6-8, wherein the physical GPU mounting unit (503) is further configured to:
query according to a preset corresponding table to obtain the target physical GPU corresponding to the target virtual GPU; wherein the corresponding table records a corresponding relationship between each physical GPU and each virtual GPU virtualized by the physical GPU using the virtualization technology;
replace virtual configuration information of the target GPU with real configuration information of the target physical GPU; and
mount the target physical GPU to the target container based on the real configuration information.

10. The apparatus according to any one of claims 6-9, wherein the apparatus further comprises:
a process isolation unit, configured to control the target physical GPU to isolate model training tasks from different containers through different processes, in response to the target physical GPU being simultaneously mounted to at least two containers.

11. An electronic device, comprising:
at least one processor (601); and
a memory (602) communicatively connected to the at least one processor;
wherein the memory stores instructions executable by the at least one processor, the instructions, when executed by the at least one processor, cause the at least one processor to perform the method for sharing a GPU according to any one of claims 1-5.

12. A non-transitory computer readable storage medium, storing computer instructions, wherein the computer instructions are used to cause the computer to perform the method for sharing a GPU according to any one of claims 1-5.

13. A computer program product, comprising a computer program, wherein the computer program, when executed by a processor, causes the processor to implement the method according to any one of claims 1-5.
